# EUROPÄISCHE PATENTSCHRIFT

(11) **EP 2 790 890 B1**
(45) Veröffentlichungstag und Bekanntmachung des Hinweises auf die Patenterteilung: **15.03.2017**
(21) Anmeldenummer: 12808750.9
(22) Anmeldetag: 10.12.2012
(51) Int. Cl.: B29C 45/16, B29C 45/14, G01D 11/24

(54) **VERFAHREN ZUR HERSTELLUNG EINES SENSORS**
METHOD FOR PRODUCING A SENSOR
PROCÉDÉ DE RÉALISATION D'UN CAPTEUR

(30) Priorität: 17.12.2011 DE 102011121412
(43) Veröffentlichungstag der Anmeldung: 22.10.2014
(73) Patentinhaber: Continental Teves AG & Co. oHG, 60488 Frankfurt (DE); Continental Automotive GmbH, 30165 Hannover (DE)
(72) Erfinder: PANIS, Marc, B-2820 Bonheiden (BE); VIERING, Matthias, 64367 Mühltal (DE); BIEBRICHER, Lothar, 61440 Oberursel (DE); DÉLÉRIS, Robert, F-31400 Toulouse (FR); APERS, Leon, B-1840 Londerzeel (BE); GRIS, Marie-Noelle, B-2845 Niel (BE); CZEH, Matyas, H-8066 Pustavám (HU)
(86) Internationale Anmeldenummer: PCT/EP2012/075000
(87) Internationale Veröffentlichungsnummer: WO 2013/087587

(56) Entgegenhaltungen:
- DE-A1-102006 029 980
- DE-A1-102006 030 133
- FR-A1- 2 864 700
- US-A1- 2007 001 664

## Beschreibung

Die vorliegende Erfindung betrifft ein Verfahren zur Herstellung eines Sensors. Sie ist ferner auf einen Sensor gerichtet.

Es ist eine Vielzahl von Sensoren bekannt, die sich aus dem eigentlichen Sensorelement zum Messen einer Messgröße sowie entsprechenden Signalverarbeitungs-, Signalauswerte- und/oder Signalübertragungseinrichtungen zusammensetzen. Als Beispiel seien hier Sensoren zur Messung der Winkelposition, Geschwindigkeit und Drehzahl von Kurbel- und Nockenwellen von Fahrzeugen genannt. Zur Herstellung von derartigen Sensoren kommt eine Vielzahl von Fertigungsprozessen zum Einsatz, wobei sich durch die unterschiedlichen Ausbildungen und Einsatzzwecke der Sensoren unterschiedliche Fertigungsmaßnahmen ergeben. Für jeden Sensor findet daher in der Regel ein eigener spezieller Fertigungsprozess Verwendung.

Die DE 10 2006 030 133 A1 beschreibt einen Sensor und ein Herstellungsverfahren hierfür.

Der vorliegenden Erfindung liegt die Aufgabe zugrunde, ein Verfahren zur Herstellung eines Sensors zu schaffen, mit dem Sensoren für unterschiedliche Einsatzzwecke auf weitgehend standardisierte Weise hergestellt werden können.

Diese Aufgabe wird erfindungsgemäß durch ein Verfahren gelöst, das die folgenden Schritte umfasst:
Vorumspritzen eines Sensorelementes mit IC zur Herstellung eines Vorspritzlings (Submoduls), der so ausgebildet wird, dass er elektrische Kontakte für den Sensor mit verschiedenen Abmessungen und/oder in verschiedenen Positionen durch Presspassung aufnehmen kann;
Einpressen der elektrischen Kontakte in Ausnehmungen/Vertiefungen des Vorspritzlings;
Verbinden der Anschlüsse des IC des Sensorelementes mit den elektrischen Kontakten;
Einlegen des Vorspritzlings in ein Spritzgießwerkzeug und Umspritzen des Vorformlings zur Herstellung des fertigen Sensors.

Das erfindungsgemäße Verfahren basiert auf der Grundidee, einen weitgehend standardisierten Vorspritzling zu schaffen, der zur Aufnahme verschiedenartiger Sensorelemente und Kontakte geeignet ist und somit in Abhängigkeit vom jeweiligen Einsatzzweck des Sensors ausgestaltet werden kann. Hierbei können verschiedenartige Sensorelemente mit IC eingesetzt werden. Da darüber hinaus die elektrischen Kontakte für den Sensor nicht mit in den Vorspritzling eingespritzt werden, sondern mittels Presspassung an diesem befestigt werden, können auch die elektrischen Kontakte in Bezug auf den jeweiligen Anwendungszweck ausgewählt und am Vorspritzling fixiert werden. Hierdurch kann der Vorspritzling als Standardteil mit verschiedenartigen Sensorelementen und/oder elektrischen Kontakten bestückt werden. Danach werden die Anschlüsse des IC des Sensorelementes mit den elektrischen Kontakten, die durch Presspassung im bzw. am Vorspritzling angeordnet worden sind, verbunden, und es folgt ein Umspritzen des Vorformlings zur Herstellung des fertigen Sensors.

Durch das Vorumspritzen des Sensorelementes mit IC zur Herstellung des Vorspritzlings (Submoduls) wird die Position des Sensorelementes und des IC für den weiteren Fertigungsprozess und über die gesamte Lebensdauer des Sensors festgelegt. Der Vorspritzling wird dabei so konzipiert, dass er die elektrischen Kontakte für den Sensor über einen bestimmen Dimensions/Positionsbereich aufnehmen kann, wobei die Kontakte in Ausnehmungen/Vertiefungen des Vorspritzlings eingedrückt und somit durch Presspassung fixiert werden. Bei den elektrischen Kontakten handelt es sich vorzugsweise um Blechteile, die gestanzt und nachträglich gebogen sind. Sie sind vorzugsweise mit leichtem Übermaß versehen, so dass sie durch die dadurch entstehende Pressung während des gesamten Fertigungsvorganges in Position gehalten werden können, und zwar auch beim später erfolgenden Umspritzen.

Hierbei ist die Passung zwischen elektrischem Kontakt und Vorspritzling (Submodul) für eine breite Palette von Materialstärken geeignet, beispielsweise 0,3 mm bis 0,8 mm. Eine weite Applizierbarkeit ist dadurch möglich.

Durch das direkte Eindrücken der elektrischen Kontakte in den Vorspritzling wird eine Reihe von Vorteilen erzielt. Es wird ein höherer Standardisierungsgrad sowie eine einheitliche Einsetzbarkeit für viele Applikationen erreicht. Der Vor-spritzling kann unabhängig von der elektrischen Kontaktierung gefertigt werden. Er ist unabhängig von der Pinbelegung am Stecker. Die Pressverbindung zwischen Vor- spritzling und elektrischem Kontakt ist für eine breite Palette von Materialstärken geeignet. Es ist keine zusätzliche Umspritzung zum Fixieren und Positionieren der Kontakte erforderlich. Diese werden vom Vorspritzling gehalten. Es fallen weniger elektrische Verbindungen und somit ein geringerer Fertigungsaufwand an. Demzufolge sinkt die Störungsanfälligkeit. Das Werkzeugkonzept des Vorspritzlings (Submoduls) wird nicht durch das Durchführen von Kontaktstreifen erschwert.

In Weiterbildung des erfindungsgemäßen Verfahrens wird der Vorspritzling zusammen mit einem Befestigungsteil im Spritzgießwerkzeug umspritzt. Hierbei kann es sich beispielsweise um einen zur Aufnahme einer Schraubverbindung geeigneten Flansch handeln.

Bei den hier in Rede stehenden Sensoren werden häufig Magneten zur Erzeugung von magnetischen Feldern benötigt, um eine magnetische Messgröße zu generieren. Für diesen Fall wird bei dem erfindungsgemäßen Verfahren das Sensorelement mit IC zusammen mit einem Magneten vorumspritzt, um einen den Magneten enthaltenden Vorspritzling (Submodul) zu erhalten. Der Magnet kann auf diese Weise unproblematisch in den Vor- spritzling eingearbeitet werden, da dieser keine eingespritzten Kontakte, Kontaktstreifen etc. enthält.

Der Vorspritzling wird vorzugsweise so ausgebildet, dass er neben den elektrischen Kontakten weitere elektrische/elektronische Bauteile, wie beispielsweise einen elektrischen Widerstand, aufnehmen kann. Diese Bauteile werden nach dem Eindrücken der elektrischen Kontakte in entsprechende Aufnahmen des Vorspritzlings eingefügt und, falls erforderlich, direkt mit den Kontakten verbunden, beispielsweise mit dem Kontakt für die Spannungsversorgung verschweißt. Hierdurch werden die Bauteile vorpositioniert und auch in Bezug auf das nachfolgende Umspritzen geschützt.

Der Vorspritzling wird zweckmäßigerweise so ausgebildet, dass die Belegung der elektrischen Kontakte gewechselt werden kann. Im Vorspritzling wird ausreichend Platz vorgesehen, um einen derartigen Belegungswechsel durchführen zu können, insbesondere ein Kreuzen der elektrischen Kontakte zu bewirken (sogenannter swap). Damit kann die jeweilige Pinbelegung vom Stecker der Applikation angepasst werden. Beispielsweise können die Signalleitung und Masseleitung gekreuzt werden.

Der Vorspritzling wird vorzugsweise mit einem abtrennbaren Positionierstift versehen, um eine Positionierung des Vorspritzlings im Spritzgießwerkzeug zu ermöglichen. So kann beispielsweise die Positionierung des Vorspritzlings über den Positionierstift auf der einen Seite und die Kontaktstifte vom Stecker auf der anderen Seite erfolgen. In einem letzten Fertigungsschritt kann dann der Positionierstift abgetrennt werden.

Beim Vorumspritzen des Sensorelementes mit IC zur Herstellung des Vorspritzlings wird das Sensorelement mit IC vorzugsweise senkrecht zur Achse des Vorspritzlings positioniert. Nach dem Einpressen der elektrischen Kontakte in den Vorspritzling werden dann die Anschlüsse des IC vor dem Verbinden mit den elektrischen Kontakten umgebogen (um 90°).

Die vorliegende Erfindung betrifft ferner einen Sensor umfassend einen umspritzten Vorformling, der durch Vorumspritzen eines Sensorelementes mit IC und durch Einpressen von elektrischen Kontakten für den Sensor in den Vorspritzling hergestellt ist. Ein derartiger Sensor weist einen weitgehend standardisierten Vorspritzling auf, der zur Aufnahme verschiedenartiger Sensorelemente und elektrischer Kontakte geeignet ist und sich daher individuell an entsprechende Ein-satzzwecke anpassen lässt, obwohl der Fertigungsprozess weitgehend standardisiert ist.

Die Erfindung wird nachfolgend anhand von Ausführungsbeispielen in Verbindung mit der Zeichnung im Einzelnen erläutert. Es zeigen:
Figur 1a-d einzelne Schritte zur Herstellung einer ersten
   Ausführungsform eines Sensors; und
Figur 2a-c einzelne Schritte zur Herstellung einer zweiten Ausführungsform eines Sensors.

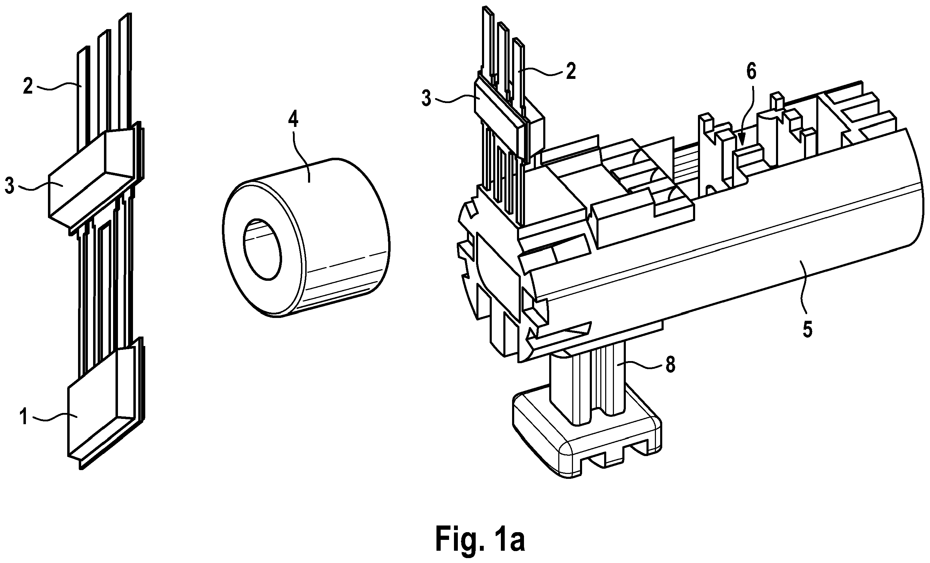

Figur 1a zeigt auf der linken Seite ein Sensorelement 1 mit IC sowie entsprechenden Leitungsanschlüssen 2, denen ein Kondensator 3 zugeordnet ist. Darüber hinaus zeigt Figur 1a in der Mitte einen hohlzylindrisch ausgebildeten Magneten 4. Beide Teile, d.h. das Sensorelement 1 und der Magnet 4, werden mit einem geeigneten Kunststoff vorumspritzt, so dass der in Figur 1a rechts dargestellte Vorspritzling (Submodul) 5 erhalten wird. Der Vorspritzling 5 wird dabei so ausgebildet, dass er entsprechende Ausnehmungen/Vertiefungen 6 zur Aufnahme von elektrischen Kontakten 7 für das Sensorelement bzw. den Sensor aufweist. Das Sensorelement 1 wird dabei so umspritzt, dass dessen Anschlüsse 2 vom Vorspritzling 5 senkrecht nach oben stehen. Der Magnet 4 ist im Inneren des Vorspritzlings 5 angeordnet und nicht zu erkennen.

Des Weiteren wird der Vorspritzling 5 so ausgebildet, dass er einen abtrennbaren Positionierstift 8 aufweist, der zum Positionieren des Vorspritzlings 5 für die spätere Umspritzung dient.

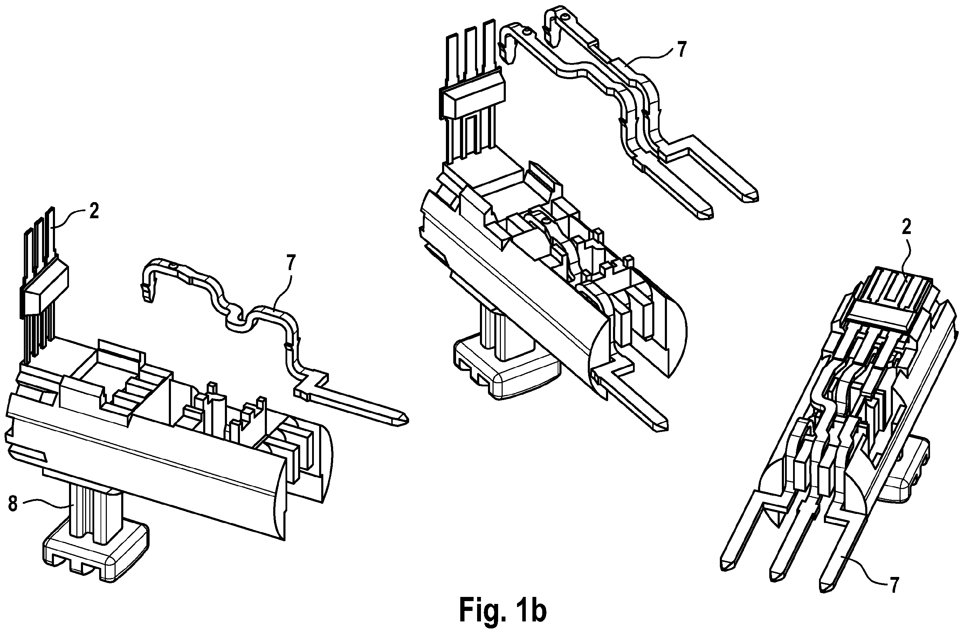

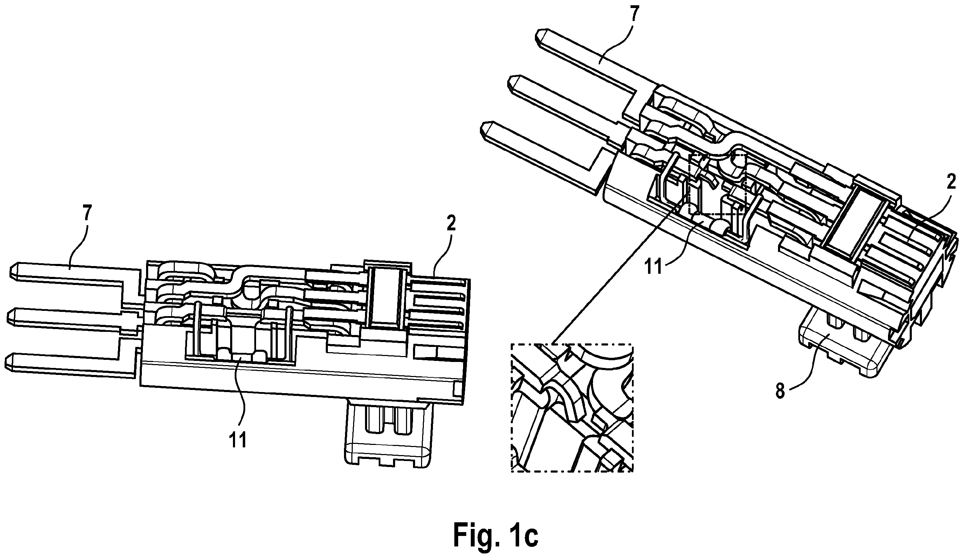

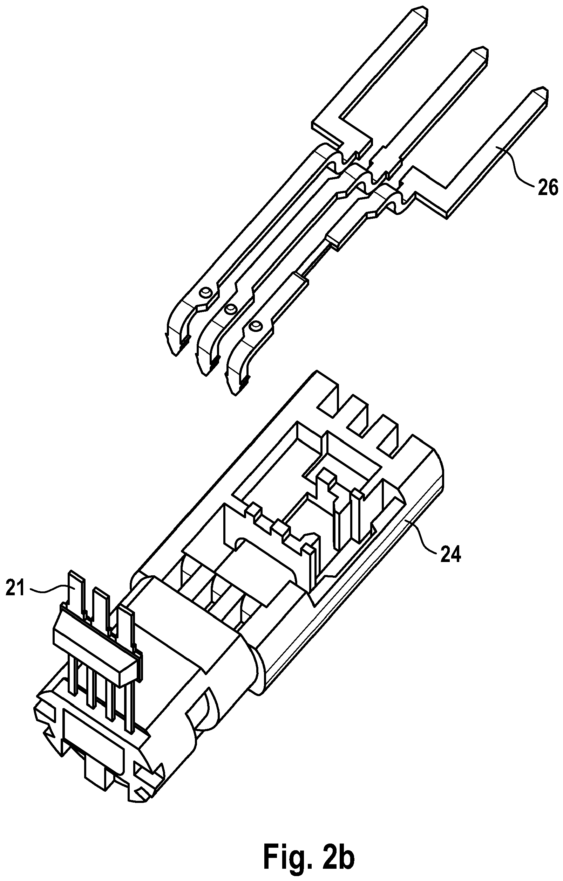

Wie in Figur 2b dargestellt, werden als Nächstes elektrische Kontakte 7 für den Sensor in die Ausnehmungen/Vertiefungen 6 des Vorspritzlings 5 eingepresst. Dabei sind die Ausnehmungen/Vertiefungen 6 so ausgebildet, dass sie unterschiedlich große elektrische Kontakte 7 mittels Presspassung aufnehmen können bzw. dass elektrische Kontakte 7 in verschiedenen Positionen angeordnet werden können. So können die elektrischen Kontakte 7 beispielsweise geradlinig oder über Kreuz angeordnet werden, wie in den Figuren 1b und 1c dargestellt.

Bei den elektrischen Kontakten 7 handelt es sich um Blechteile, die ausgestanzt und nachträglich gebogen wurden. Sie sind mit Widerhaken mit leichtem Übermaß versehen, so dass sich auf diese Weise die entsprechende Presspassung herstellen lässt. Wesentlich ist, dass diese elektrischen Kontakte 7 nicht eingespritzt, sondern eingepresst werden, so dass verschiedenartige Kontakte in verschiedenen Lagen am Vor- spritzling 5 angeordnet werden können.

Nach dem Einpressen der hier dargestellten drei elektrischen Kontakte 7 werden die Anschlüsse 2 des Sensorelementes 1 umgebogen und mit den Enden der elektrischen Kontakte 7 verbunden (verschweißt). Die entsprechende Schweißverbindung ist in Figur 1c bei 8 dargestellt.

Bei der hier dargestellten Ausführungsform wird ferner ein elektrischer Widerstand 11 in eine Aufnahme auf Vorspritzling 5 eingefügt und direkt mit dem elektrischen Kontakt für die Spannungsversorgung verschweißt. Eine Unterbrechung zwischen den beiden Schweißpunkten wird erst nach dem Schweißen hergestellt. Dadurch wird mit der Konstruktion eine Ausführungsform sowohl mit als auch ohne Widerstand möglich.

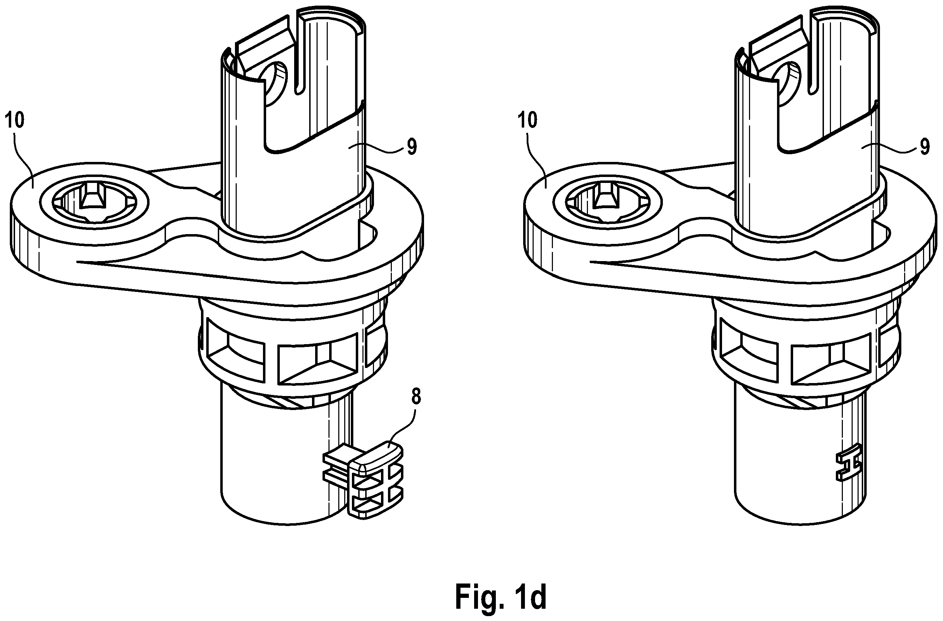

Der auf diese Weise hergestellte Vorspritzling (Submodul) 5 wird dann in ein Spritzgusswerkzeug (nicht gezeigt) gelegt. Die Positionierung erfolgt hierbei über den Positionierstift 8 an der einen Seite und die Kontaktstifte vom Stecker auf der anderen Seite. Zusammen mit einem Befestigungsteil 10 wird der Vorspritzling 5 mit thermoplastischem Material umspritzt, so dass der in Figur 1d dargestellte fertige Sensor erhalten wird. Als letzter Fertigungsschritt wird der Positionierstift 8 abgetrennt, wie dies in der rechten Abbildung von Figur 1d dargestellt ist.

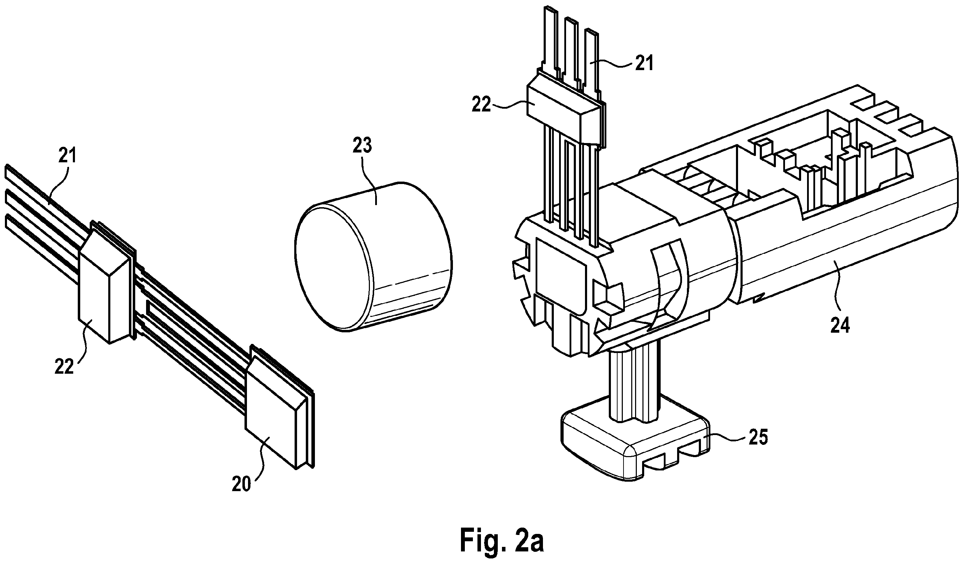

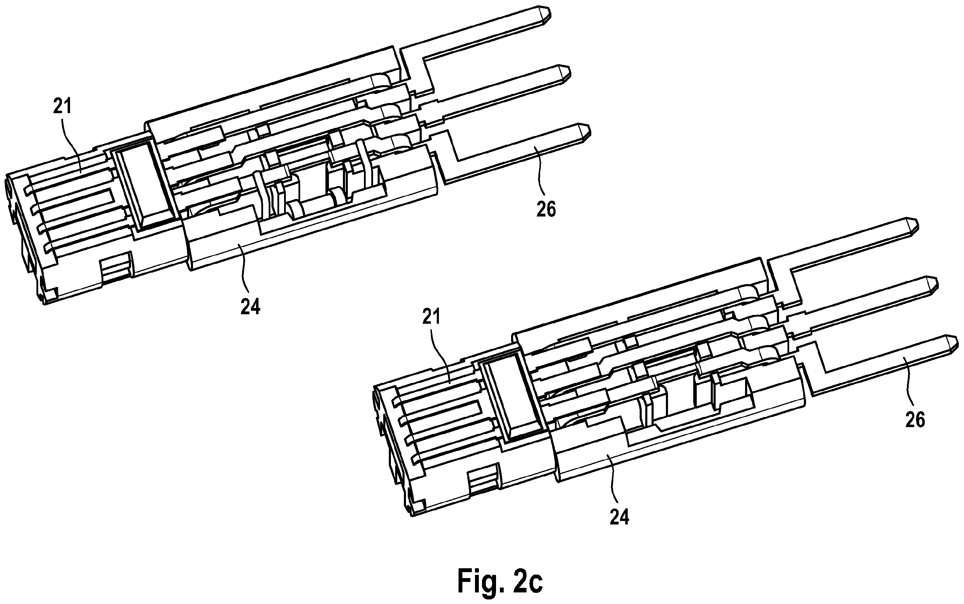

Die Ausführungsform der Figur 2 unterscheidet sich von der der Figur 1 im Wesentlichen nur dadurch, dass ein anders ausgebildeter Magnet 23 umspritzt wird und dass die elektrischen Kontakte 26 sich nicht überkreuzen. Auch hierbei wird ein Sensorelement 20 mit IC und entsprechenden Anschlüssen 21 sowie einem Kondensator 22 zusammen mit einem Magneten 23 für einen Vorspritzling 24 umspritzt, der einen entsprechenden Positionierstift 25 aufweist. In einem weiteren Schritt werden elektrische Kontakte 26 in entsprechende Ausnehmungen/ Vertiefungen des Vorspritzlings 24 eingepresst, wonach die Anschlüsse 21 umgebogen und mit den elektrischen Kontakten 26 verschweißt werden. Schließlich wird der auf diese Weise ausgebildete Vorspritzling in ein Spritzgießwerkzeug eingelegt und für die Herstellung des fertigen Sensors umspritzt.

## Patentansprüche

1. Verfahren zur Herstellung eines Sensors mit den folgenden Schritten:
Vorumspritzen eines Sensorelementes (1, 20) mit IC zur Herstellung eines Vorspritzlings (5, 24), der so ausgebildet wird, dass er elektrische Kontakte (7, 26) für den Sensor mit verschiedenen Abmessungen und/oder in verschiedenen Positionen durch Presspassung aufnehmen kann;
Einpressen der elektrischen Kontakte (7, 26) in Ausnehmungen/Vertiefungen des Vorspritzlings (5, 24);
Verbinden der Anschlüsse des IC des Sensorelementes (1, 20) mit den elektrischen Kontakten (7, 26);
Einlegen des Vorspritzlings (5, 24) in ein Spritzgießwerkzeug und Umspritzen des Vorformlings zur Herstellung des fertigen Sensors.

2. Verfahren nach Anspruch 1, **dadurch gekennzeichnet, dass** der Vorspritzling (5, 24) zusammen mit einem Befestigungsteil im Spritzgießwerkzeug umspritzt wird.

3. Verfahren nach einem der vorangehenden Ansprüche, **dadurch gekennzeichnet, dass** das Sensorelement (1, 20) mit IC zusammen mit einem Magneten vorumspritzt wird, um einen den Magneten enthaltenden Vorspritzling (Submodul) zu erhalten.

4. Verfahren nach einem der vorangehenden Ansprüche, **dadurch gekennzeichnet, dass** der Vorspritzling (5, 24) so ausgebildet wird, dass er neben den elektrischen Kontakten (7, 26) weitere elektrische/elektronische Bauteile, wie einen elektrischen Widerstand, aufnehmen kann.

5. Verfahren nach einem der vorangehenden Ansprüche, **dadurch gekennzeichnet, dass** der Vorspritzling (5, 24) so ausgebildet wird, dass die Belegung der elektrischen Kontakte (7, 26) gewechselt werden kann.

6. Verfahren nach einem der vorangehenden Ansprüche, **dadurch gekennzeichnet, dass** der Vorspritzling (5, 24) mit einem abtrennbaren Positionierstift versehen wird.

7. Verfahren nach einem der vorangehenden Ansprüche, **dadurch gekennzeichnet, dass** die Anschlüsse des IC vor dem Verbinden mit den elektrischen Kontakten (7, 26) umgebogen werden.

8. Verfahren nach einem der vorangehenden Ansprüche, **dadurch gekennzeichnet, dass** der Vorspritzling (5, 24) so ausgebildet wird, dass ausreichend Platz vorgesehen wird, damit sich die elektrischen Kontakte (7, 26) kreuzen lassen.

## Claims

1. Method for producing a sensor having the following steps:
pre-injection mold around a sensor element (1, 20) with IC to produce a pre-molded part (5, 24) which is realized such that, as a result of an interference fit, it is able to receive electric contacts (7, 26) for the sensor with different dimensions and/or in different positions;
press the electric contacts (7, 26) into recesses/indentations of the pre-molded part (5, 24;
connect the connections of the IC of the sensor element (1, 20) to the electric contacts (7, 26);
insert the pre-molded part (5, 24) into an injection molding mold and injection-mold around the pre-molded part to produce the finished sensor.

2. Method according to Claim 1, **characterized in that** the pre-molded part (5, 24) is injection molded around in the injection molding mold together with a fastening part.

3. Method according to one of the preceding claims, **characterized in that** the sensor element (1, 20) with IC is pre-injection molded around together with a magnet in order to obtain a pre-molded part (sub-module) which includes the magnet.

4. Method according to one of the preceding claims, **characterized in that** the pre-molded part (5, 24) is realized such that, aside from the electric contacts (7, 26), it is able to receive further electric/electronic components, such as an electric resistor.

5. Method according to one of the preceding claims, **characterized in that** the pre-molded part (5, 24) is realized such that the assignment of the electric contacts (7, 26) is able to be changed.

6. Method according to one of the preceding claims, **characterized in that** the pre-molded part (5, 24) is provided with a removable positioning pin.

7. Method according to one of the preceding claims, **characterized in that** the connections of the IC are bent around prior to connection to the electric contacts (7, 26).

8. Method according to one of the preceding claims, **characterized in that** the pre-molded part (5, 24) is realized such that sufficient space is provided so that the electrical contacts (7, 26) can be swapped.

## Revendications

1. Procédé de réalisation d'un capteur, comprenant les étapes suivantes:
- pré-enrober par projection un élément de capteur (1, 20) comportant un IC pour la production d'une ébauche pré-enrobée (5, 24), qui est réalisée de telle manière qu'elle puisse accepter des contacts électriques (7, 26) pour le capteur avec différentes dimensions et/ou dans différentes positions par ajustement serré;
- insérer les contacts électriques (7, 26) dans des évidements/creux de l'ébauche pré-enrobée (5, 24);
- relier les raccords du IC de l'élément de capteur (1, 20) aux contacts électriques (7, 26);
- déposer l'ébauche pré-enrobée (5, 24) dans un outil de coulée par injection et enrober l'ébauche pré-enrobée pour la réalisation du capteur terminé.

2. Procédé selon la revendication 1, **caractérisé en ce que** l'ébauche pré-enrobée (5, 24) est enrobée en compagnie d'une pièce de fixation dans l'outil de coulée par injection.

3. Procédé selon l'une quelconque des revendications précédentes, **caractérisé en ce que** l'élément de capteur (1, 20) comportant un IC est pré-enrobé par injection en compagnie d'un aimant, afin d'obtenir une ébauche pré-enrobée (sous-module) contenant l'aimant.

4. Procédé selon l'une quelconque des revendications précédentes, **caractérisé en ce que** l'ébauche pré-enrobée (5, 24) est réalisée de telle manière qu'elle puisse accepter, en plus des contacts électriques (7, 26), d'autres composants électriques/électroniques, comme une résistance électrique.

5. Procédé selon l'une quelconque des revendications précédentes, **caractérisé en ce que** l'ébauche pré-enrobée (5, 24) est réalisée de telle manière que l'occupation des contacts électriques (7, 26) puisse être changée.

6. Procédé selon l'une quelconque des revendications précédentes, **caractérisé en ce que** l'ébauche pré-enrobée (5, 24) est munie d'une tige de positionnement détachable.

7. Procédé selon l'une quelconque des revendications précédentes, **caractérisé en ce que** les raccords du IC sont repliés avant la liaison avec les contacts électriques (7, 26).

8. Procédé selon l'une quelconque des revendications précédentes, **caractérisé en ce que** l'ébauche pré-enrobée (5, 24) est réalisée de telle manière qu'il soit prévu suffisamment de place pour que les contacts électriques (7, 26) puissent se croiser.
